Europäisches Patentamt

European Patent Office

Office européen des brevets

(11) Veröffentlichungsnummer: **0 270 959**
**A2**

(12) **EUROPÄISCHE PATENTANMELDUNG**

(21) Anmeldenummer: 87117638.4

(51) Int. Cl.4: **C08G 18/12**

(22) Anmeldetag: 28.11.87

(30) Priorität: 06.12.86 DE 3641776

(43) Veröffentlichungstag der Anmeldung:
15.06.88 Patentblatt 88/24

(84) Benannte Vertragsstaaten:
AT BE CH DE ES FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Emmerling, Winfried, Dr.
Lärchenweg 6
D-4006 Erkrath(DE)
Erfinder: Wichelhaus, Jürgen, Dr.
Egenstrasse 60
D-5600 Wuppertal 1(DE)
Erfinder: Podola, Tore
Deusserstrasse 31
D-4019 Monheim(DE)

(54) **Neuartige Isocyanatprepolymere.**

(57) Neuartige Isocyanatprepolymere, herstellbar aus 2 OH-Gruppen enthaltendem Polyether und/oder Polyestern sowie Diisocyanaten und Triolen in einem zweischrittigen Herstellungsverfahren sowie deren Verwendung als wesentliche Komponente in Dichstoffen sowie Kleb-und Überzugsmitteln.

Henkel KGaA
2.12.1986
Dr.SchOe/Ge

P a t e n t a n m e l d u n g
D 7600 EP

"Neuartige Isocyanatprepolymere"

Die Erfindung betrifft die Herstellung neuartiger Isocyanatprepolymerer und ihre Verwendung als Hauptkomponente in feuchtigkeitshärtenden Dichtstoffen, Kleb- und Überzugsmitteln.

Die Verwendung von NCO-terminierten Polyurethanprepolymeren in
Klebstoffen, Dichtungsmassen, Lacken usw. ist bekannt. Diese
Einkomponentensysteme härten durch Reaktion der NCO-Gruppen
mit Luftfeuchtigkeit aus, wobei dreidimensionale Netzwerke aufgebaut werden. Eine Alternative zu diesem Aushärtungsprinzip ist
die Zugabe von verkappten Aminen, die ohne Feuchtigkeit nicht
mit den Isocyanatgruppen reagieren, bei Zutritt von Luftfeuchtigkeit aber Aminogruppen freisetzen, die mit den NCO-Gruppen die
Vernetzungsreaktion bewirken.

Nachteil aller feuchtikeitshärtenden Polyurethansysteme ist die
Tendenz zur Bildung von Mikrorissen und Blasen durch
Freisetzen von Kohlendioxid während der Aushärtung. Dieser
Effekt wird in fast allen Anwendungsbereichen als störend
angesehen. Durch Zusatz der erwähnten verkappten Härter
(Ketimine, Aldimine) wird die Bildung von Blasen zwar vermieden,
dafür weisen diese Systeme erhebliche Mängel in der
Lagerstabilität auf. Schon durch Zutritt von Feuchtigkeitsspuren
erfolgt Entkappung des Amins und damit eine Vernetzung vor der
Applikation des Mittels. Darüber hinaus reicht die Haftung solcher
Systeme auf den verschiedensten Untergründen häufig nicht aus,
so daß man praktisch kaum ohne Vorbehandlung bzw. Primerung
der Oberflächen auskommt.

. . .

Aufgabe der vorliegenden Erfindung war es, ein Verfahren zur Herstellung neuartiger Prepolymerer und daraus formulierter Dichtstoffe, Kleb- und Überzugsmittel zu finden, die mit Feuchtigkeit zu elastischen Stoffen vernetzen, welche frei von feinen Rissen und Blasen sind, und verbesserte Haftung auf den verschiedensten Untergründen zeigen. Dabei sollte man ohne Zusatz verkappter Härter auskommen und dennoch alle sonstigen genannten Nachteile des Standes der Technik vermeiden.

Erfindungsgemäß wird die Aufgabe gelöst durch ein Verfahren zur Herstellung neuartiger Isocyanatprepolymerer mit verbessertem Härtungsverhalten, das durch einen zweischrittigen Prozeß gekennzeichnet ist. Dabei wird zunächst

a) ein 2 Hydroxylgruppen enthaltender Polyether und/oder Polyester einer Molmasse (Zahlenmittel) zwischen 500 und 5 000 mit einem Diisocyanat in einem Molverhältnis zwischen 1 : 0,7 bis 1 : 1,3 soweit umgesetzt, bis der Gehalt an freien Isocyanatgruppen zwischen 0,4 und 0,8 Gewichtsprozent liegt, und dann

b) unter gleichzeitiger Zugabe von niedermolekularem Triol und weiterem mehrfunktionellem Isocyanat bis zu einem durch das Verhältnis von noch vorhandenem Isocyanat nach a) und dem weiteren Isocyanat sowie Triol zu errechnendem Endwert an freien Isocyanatgruppen ausreagieren läßt, wobei dieser Endwert zwischen 1,5 und 3,5 Gewichtsprozent Isocyanatgruppen, bezogen auf das erhaltene Prepolymere, einzustellen ist.

Der erfindungsgemäß zur Lösung der Aufgabe beschrittene Weg besteht also im wesentlichen in einem stufenweisen Aufbau des isocyanathaltigen Prepolymeren. Hierbei wird in der ersten Stufe ein streng lineares Voraddukt hergestellt und erst im zweiten Reaktionsschritt ein sogenanntes Vernetzerpolyol, also ein trifunktionelles Polyol, das gegebenenfalls auch geringere Mengen an höherfunktionellen Polyolen, wie ein Tetrol, enthalten kann und weiteres Isocyanat zugesetzt. Hierbei verläuft eine weitere

. . .

D 7600  EP                          - 3 -

Umsetzung zwischen dem bereits gebildeten linearen mit Isocyanat
terminiertem Voraddukt und weiterhin zugesetztem niedermolekularem Diisocyanat einerseits und dem eine dreidimensionale
Vernetzung bewirkenden Triol andererseits. Werden die Reaktionskomponenten nicht in der erfindungsgemäßen zweischrittigen Weise
zur Reaktion miteinander gebracht, sondern in einem einzigen Reaktionsschritt simultan miteinander umgesetzt, erhält man zwar mit
Isocyanat terminierte Prepolymere, die selbstverständlich einer
feuchtigkeitsinduzierten Härtungsreaktion zugänglich sind, aber
nicht die geforderten günstigen Eigenschaften aufweisen. Dies
kann insbesondere bei der Weiterverarbeitung zu abdichtenden
Klebstoffen beobachtet werden. So lassen die Werte der Zugscherfestigkeiten an Werkstoffen wie Beton, Holz, Metallen oder Hart-
PVC erheblich zu wünschen übrig. Auch bei der Reißfestigkeit
werden keine günstigen Resultate gefunden, und man beobachtet
außerdem die Bildung von kleinsten Blasen bei der Vernetzung
dieser Prepolymeren.

In der ersten Stufe des erfindungsgemäßen zweischrittigen Prozesses werden ein 2 Hydroxylgruppen enthaltender Polyether
und/oder Polyester mit einem Diisocyanat in den vorstehend
genannten Molverhältnis zur Reaktion gebracht. Vorzugsweise
liegt nun das Verhältnis des 2 Hydroxylgruppen enthaltenden
Polyethers und/oder Polyesters mit der Molmasse zwischen 500 und
5 000 bei einem Molverhältnis von Polyester und/oder Polyester :
Diisocyanat zwischen 1 : 0,9 bis 1 : 1,2. Aus diesen Zahlenangaben ergibt sich, daß man sowohl mit einem Unterschuß als
auch mit einem Überschuß – bezogen auf das Isocyanat – an
Hydroxylendgruppen enthaltendem Polyester und/oder Polyether
arbeiten kann. Wenn ein Überschuß an Isocyanatkomponente
vorliegt, so soll der Gewichtsprozentgehalt an freien
Isocyanatgruppen im ersten Reaktionsschritt vorzugsweise
zwischen 0,6 und 0,8 % liegen, während man bei einem Überschuß
an Diolkomponente auf einen Isocyanatgehalt vorzugsweise

. . .

D 7600 EP                          - 4 -

zwischen 0,4 und 0,6 Gew.-% abstellt. Sobald dieser Gehalt erreicht ist, ist der erste Schritt des Reaktionsprozesses beendet.

Ausgangsmaterial zur Herstellung der Prepolymeren sind in erster Linie Polyether, wie sie durch Addition an zweiwertige Alkohole wie Glykol (Ethylenglykol), Propylenglykol, Butandiol-1,4 erhalten werden können. Hierbei handelt es sich um handelsübliche Diole, die bevorzugt durch Polyaddition von Propylenoxid herstellbar sind. Aber auch andere Olefinoxide können zur Herstellung derartiger Polydiole verwendet werden. Schließlich ist es möglich, durch Ringöffnungspolmerisation von Tetrahydrofuran entsprechende 1,4-Ether des Butandiols herzustellen. Neben den Polyethern können in bekannter Weise zur Herstellung geeigneter 2 Hydroxylgruppen enthaltender Polyester die Veresterungsprodukte des Glykols, Diethylenglykols, 1,4-Butandiols mit Dicarbonsäuren wie Adipinsäure, Sebazinsäure, Terephthalsäure, Phthalsäure bzw. deren Anhydride und dergleichen verwendet werden. Auch derartige Polyester sind in der Technik allgemein üblich und bekannt als Ausgangsmaterialien zur Herstellung von Isocyanatprepolymeren.

Für das erfindungsgemäße Verfahren geeignete Diisocyanate sind die isomeren Toluylendiisocyanate, insbesondere technische Gemische des 2,4- und 2,6-Isomeren, Diphenylmethandiisocyanat, 1,6-Hexamethylendiisocyanat, Naphthylendiisocyanat, Xylylendiisocyanat, Isophorondiisocyanat, 2,4,4-Trimethyl-1,6-diisocyanatohexan und dimeres Toluylendiisocyanat-2,4.

Bei der Durchführung des erfindungsgemäßen Verfahrens werden zweckmäßig geeignete Katalysatoren, welche die Isocyanatpolyaddition begünstigen, mitverwendet. Es handelt sich beispielsweise um die bekannten Zinnverbindungen wie Dibutylzinndilaurat sowie Tertiäramine wie Endoethylenpiperazin.

. . .

0 270 959

Bei dem zweiten Reaktionsschritt wird eine partielle Verzweigung des Prepolymeren bewirkt. Dazu wird neben niedermolekularem Triol ein weiteres Diisocyanat bzw. mehrfunktionelles Isocyanat in einem solchen Verhältnis zur Reaktion gebracht, daß das Endprodukt einen Gehalt an 1,5 bis 3,5 Gew.-% von Isocyanatgruppen aufweist. Der Verlauf bzw. das Ende dieser Reaktion kann durch Verfolgen des Gehalts an freiem Isocyanat im Reaktionsgemisch beobachtet werden. Als geeignete Triole kommen in Frage Trimethylolpropan bzw. Additionsprodukte von Propylen- oder Ethylenoxid an Trimethylolpropan, Glycerin oder anderen technisch gut erhältlichen trifunktionellen Alkoholen. Auch ist es möglich, ein Teil des Triols bis zu etwa 25 Mol-% durch ein Tetrol zu ersetzen. In diesem Fall wird natürlich eine stärkere Verzweigung bewirkt, die sich in verschiedenster Weise auf die Eigenschaften des Prepolymeren bzw. des daraus erhältlichen Polyurethans auswirkt. Im Prinzip kommen für diese zweite Reaktion die gleichen Diisocyanate in Frage, welche vorstehend im ersten Schritt des Prozesses eingesetzt worden sind.

Nach einer Variation des erfindungsgemäßen Verfahrens ist es auch möglich, anstelle eines Triols ein Gemisch aus einem relativ kurzkettigen Diol und einem Triol einzusetzen, wobei der Gehalt an Diol und Triol bis zu einem Molverhältnis von 1 : 1 abgesenkt werden kann. In diesem Fall muß allerdings anstelle eines Diisocyanats eine entsprechende Menge eines mehrfunktionellen Isocyanats verwendet werden. Beispielsweise können eingesetzt werden Triisocyanate wie etwa Triphenylmethantriisocyanat, das Trimerisierungsprodukt von Toluylendiisocyanat sowie das Additionsprodukt von 3 Mol Toluylendiisocyanat an 1 Mol Trimethylolpropan.

Die erfindungsgemäß herstellbaren, mit Isocyanat terminierten Prepolymeren ergeben nach ihrer durch die Feuchtigkeit der Umgebung bewirkten Aushärtung Netzstrukturen mit reproduzierbaren,

. . .

gewünschten Maschenweiten. Bei der Synthese von Prepolymeren aus 2 Hydroxylgruppen aufweisenden Diolen und sogenannten Verzweigungspolyolen, d.h. im wesentlichen Triolen, und Diisocyanaten im Eintopfverfahren wird demgegenüber eine mehr oder weniger gleichmäßige Verteilung der Vernetzungspunkte erreicht. Nur bei stufenweisem Aufbau wird eine gezielte Verteilung der Vernetzungsstellen am Prepolymeren erreicht und diese Reaktionsführung führt überraschenderweise allein zu den Vorteilen einer deutlich verminderten bzw. praktisch nicht mehr feststellbaren Tendenz zur Blasenbildung bei der Aushärtung der Prepolymeren und weiter zur verbesserten Haftung auf den verschiedensten Materialien wie Metallen, Beton und Kunststoffen.

Dermaßen aufgebaute NCO-terminierte Polyurethane lassen sich als wesentliche Komponente in Zusammensetzungen von Kleb- und Dichtstoffen einsetzen. Hierbei können die dem Fachmann bekannten Hilfsmittel wie Füllstoffe (Kieselsäure, Kreide, Ruß, Talk, Kunststoffpulver (quellbares PVC-Pulver), Weichmacher (z.B. Dioctylphthalat, Alkylsulfonsäureester usw.), Pigmente in Pulverform oder Farbpasten, Flammschutzmittel, Alterungsschutzmittel, ggf. auch weitere Haftvermittler mitverwendet werden.

Insbesondere zur Einstellung einer gewünschten Viskosität können Lösungsmittel (z.B. Xylol, Toluol usw.) verwendet werden, wobei jedoch solche Lösungsmittel unter 20 Gew.-%, bezogen auf die Gesamtmischung, liegen sollten.

Diese Formulierungen haben in bezug auf blasenfreie Aushärtung, mechanische Eigenschaften und Haftung auf wichtigen Untergründen wie z.B. Eisen, Kupfer, Aluminium, Hart-PVC, Beton und Meranti-Holz hervorragende Eigenschaften, die auf den speziellen Aufbau des Polyurethans zurückzuführen sind. Die

. . .

D 7600 EP                    - 7 -

Vergleichswerte    mit    Prepolymeren    ohne    bimodale
Netzwerkverteilung zeigen dies eindeutig. In vielen Fällen wird
eine Vorbehandlung der Oberflächen mit einem Haftvermittler
unnötig, so daß eine Einsparung dieses Arbeitsschrittes möglich
ist.

0 270 959

D 7600 EP                    - 8 -

## Beispiele

Die folgenden Beispiele veranschaulichen die Erfindung.
Die NCO-Werte sind in Gewichtsprozent wiedergegeben.
Als Prüfverfahren wurden benutzt:

- Reißdehnung und Reißfestigkeit: DIN 53504
  (Abzugsgeschwindigkeit 200 mm/min)
- Haftung auf den verschiedenen Untergründen:
  DIN 52455, Teil 1 (Zugfestigkeit)
  Prüfkörper mit den Fugenmaßen: 50 x 15 x 15 mm
  Abzugsgeschwindigkeit: 26 mm/min
- Viskosität: Nach Brookfield bei 22 °C.

Herstellung der Polyurethan-Prepolymeren:

Beispiel 1

Unter Inertgasatmosphäre wurden 665 g Polyoxypropylenglykol mit
der (Molmasse 2000, OH-Zahl 55) vorgelegt und 0,13 g
Benzoylchlorid sowie 0,36 g (0,05 Gew.-%) Dibutylzinndilaurat
eingerührt. Dann wurden 52,5 g 2,4-Toluylendiisocyanat
hinzugegeben und etwa 5 Stunden bei 75 °C gerührt. Der
NCO-Wert betrug dann 0,5 %. Anschließend wurden 14,3 g des
Addukts aus Glycerin und Propylenoxid im Molverhältnis 1 : 6
hinzugegeben und im Verlauf von 15 min 75 g
Diphenylmethandiisocyanat eingetropft. Die Mischung wurde noch
2 Stunden bei 75 °C nachgerührt.

NCO-Wert:          2,25 %
Viskosität:        85 000 mPa·s

. . .

D 7600  EP                    - 9 -

Beispiel 2

Es wurde verfahren wie im Beispiel 1, jedoch wurden in der ersten Stufe zu einer Mischung aus 665 g des Polyoxypropylenglykols und und 0,13 g Benzoylchlorid noch 93,7 g Diphenylmethandiisocyanat zugefügt. Nach 7 Stunden wurde ein NCO-Wert von 0,65 % festgestellt. Anschließend setzte man eine Mischung von 21,5 g des Adduktes aus Glycerin und Propylenoxid sowie 45,7 g 2,4-Toluylendiisocyanat und 0,4 g Dibutylzinndilaurat zu, die man zuvor 30 min lang bei 60 °C hatte vorreagieren lassen. Es wurde noch 1 Stunde bei 75 °C gerührt.

NCO-Wert:      2,1 %

Viskosität:    $1,1 \cdot 10^6$ mPa·s

Beispiel 3:

Zunächst wurde wie in Beispiel 2 die erste Stufe des Reaktionsprozesses hergestellt. Anschließend werden 14,3 g des Adduktes aus Glycerin und Propylenoxid sowie 41,85 g eines Gemisches aus 2,4- und 2,6-Toluylendiisocyanat (Molverhältnis 65 : 35) und 0,4 g Dibutylzinndilaurat nacheinander, d.h. ohne Vorreaktion, zugegeben. Es wurde noch 1 Stunde bei 75 °C gerührt.

NCO-Wert:      2,2 %

Viskosität:    800 000 mPa·s

D 7600 EP                              -10 -

## Vergleichsversuche

A) Unter Inertgasatmosphäre wurden in einer Eintopfreaktion 665 g Polyoxypropylenglykol (Molmasse 2000, OH-Zahl 55),

14,3 g des Adduktes aus Glycerin und Propylenoxid,

0,14 g Benzoylchlorid,

43,5 g 2,4-Toluylendiisocyanat,

81,25 g Diphenylmethandiisocyanat und 0,4 g Dibutylzinndilaurat

2 Stunden lang bei 75 °C gerührt.

NCO-Wert:      2,0 %

Viskosität:      50 000 mPa's

B) Unter Inertgasatmosphäre wurden in einer Eintopfreaktion 920,8 g Polyoxypropylenglykol (Molmasse 2000, OH-Zahl 55),

4,5 g Trimethylolpropan,

0,18 g Benzoylchlorid und

212,5 g Diphenylmethandiisocyanat

6 Stunden lang bei 75 °C gerührt.

NCO-Wert:      2,6 %

Viskosität:      50 000 mPa's

## Herstellung eines Dichtklebstoffs

### Beispiel 4

In einem Planetendissolver in Vakuumausführung wurden unter Stickstoff 250 g Prepolymer aus Beispiel 1, 60 g Diisooctylphthalat, 35 g einer feindispersen pyrogenen Kieselsäure (Teilchengröße 150 - 200 µm, Schüttgewicht 40 g/l) und 0,5 g Dibutylzinndilaurat 30 min lang bei einer Temperatur von 60 °C

. . .

D 7600 EP                    -11 -

intensiv durchmischt. Anschließend wurde unter weiterem Rühren
30 min bei 1,3 kPa entlüftet.

<u>Beispiele 5 und 6</u>

Entsprechend der vorstehenden Vorschrift wurden mit den Prepolymeren der Beispiele 2 und 3 die Dichtklebstoffe 5 und 6 hergestellt.

Die Eigenschaften der Dichtklebstoffe sind in der Tabelle zusammengestellt. Dabei ist in Abhängigkeit von der laufenden Nummer des
Beispiels und des somit eingesetzten Prepolymeren angegeben die
Reißfestigkeit (DIN 53504) und die Reißdehnung. Ferner ist die
Zugfestigkeit gemäß DIN 52455 auf verschiedenen Materialien aufgeführt.

## Tabelle

| Beispiel/ Prepolymer | Reiß- festigkeit $(N/mm^2)$ | Reiß- dehnung (%) | Zugfestigkeit $(N/cm^2)$ Beton | Al | hPVC | Meranti |
|---|---|---|---|---|---|---|
| 4/1 | 2,1 | 1625 | 34 | 57 | > 67 | > 67 |
| 5/2 | 3,3 | 1800 | 34 | 44 | 64 | > 67 |
| 6/3 | 5,2 | 1700 | 65 | 52 | 53 | > 67 |
| Vergl.A | 0,8 | 2300 | 13 | 7 | 6 | 16 |
| Vergl.B | 1,2 | 2300 | 16 | 14 | 23 | 40 |

. . .

D 7600 EP                    -13 -

## Patentansprüche

1) Verfahren zur Herstellung neuartiger Isocyanatprepolymeren mit verbessertem Härtungsverhalten, dadurch gekennzeichnet, daß man in einem zweischrittigen Prozeß zunächst

a) ein 2 Hydroxylgruppen enthaltenden Polyether und/oder Polyester einer Molmasse (Zahlenmittel) zwischen 500 und 5 000 mit einem Diisocyanat in einem Molverhältnis zwischen 1 : 0,7 bis 1 : 1,3 soweit umsetzt, bis der Gehalt an freiem Isocyanat zwischen 0,4 und 0,8 Gewichtsprozent liegt, und dann

b) unter gleichzeitiger Zugabe von niedermolekularem Triol und weiterem mehrfunktionellem Isocyanat bis zu einem durch das Verhältnis von noch vorhandenem Isocyanat nach a) und dem weiteren Isocyanat sowie Triol zu errechnendem Endwert an freien Isocyanatgruppen ausreagieren läßt, wobei dieser Endwert zwischen 1,5 und 3,5 Gewichtsprozent Isocyanatgruppen, bezogen auf das erhaltene Prepolymere, einzustellen ist.

2) Verfahren nach Anspruch 1, dadurch gekennzeichnet, daß man im ersten Reaktionsschritt ein molares Verhältnis von 2 freie Hydroxylgruppen enthaltendem Polyether und/oder Polyester zu Diisocyanat von 1 : 0,9 bis 1 : 1,2 einstellt und bei überschüssigem Isocyanat bis zu einem Gehalt von 0,6 bis 0,8 Gewichtsprozent und bei unterschüssigem Isocyanat bis zu einem Gehalt von 0,4 bis 0,6 Gewichtsprozent reagieren läßt.

3) Verwendung der Isocyanatprepolymeren nach Ansprüchen 1 bis 2 als Hauptkomponente in feuchtigkeitshärtenden Dichtstoffen, Kleb- und Überzugsmitteln.

. . .

D 7600 EP                    -14 -

4) Verwendung der Isocyanatprepolymeren nach Ansprüchen 1
   bis 3 mit verbesserten Haftungseigenschaften auf Metallen,
   Beton und Holz bzw. Holzwerkstoffen.